(19) Europäisches Patentamt

European Patent Office

Office européen des brevets

(11) EP 0 665 418 B1

(12) EUROPEAN PATENT SPECIFICATION

(45) Date of publication and mention
of the grant of the patent:
17.03.1999 Bulletin 1999/11

(51) Int Cl.6: **G01D 5/165, F02D 11/10**

(21) Application number: 95300144.3

(22) Date of filing: 11.01.1995

(54) **Variable resistance sensor**

Widerstandsgeber

Capteur à résistance variable

(84) Designated Contracting States:
DE ES FR GB IT

(30) Priority: 31.01.1994 GB 9401748

(43) Date of publication of application:
02.08.1995 Bulletin 1995/31

(73) Proprietor: LUCAS INDUSTRIES public limited
company
London W1Y 4DJ (GB)

(72) Inventors:
• Smith, Kenneth Leonard
Rainham, Kent ME8 9NQ (GB)

• Humphries, Stephen David
Chatham, Kent ME4 5DL (GB)

(74) Representative: Bibby, William Mark et al
Mathisen, Macara & co.
The Coach House
6-8 Swakeleys Road
Ickenham Uxbridge UB10 8BZ (GB)

(56) References cited:
EP-A- 0 546 907          DE-A- 3 634 051
DE-A- 3 812 760

## Description

This invention relates to variable resistance sensors, particularly a variable resistance sensor for sensing the position of a movable component.

The invention has particular, though not exclusive, application to a variable resistance sensor for sensing the position of a vehicle pedal, such as the vehicle throttle pedal.

A known variable resistance sensor for sensing the position of a vehicle throttle pedal is described in GB 2243689. This known sensor comprises a pair of electrically resistive tracks and a respective terminal which can move along each track, in electrical contact therewith, as the position of the throttle pedal changes. A sensor of this kind is advantageous in that if a fault develops in one of the tracks, the other track can still be used allowing the throttle pedal to continue operating. However, such sensors tend to be complex, expensive, and susceptible to calibration errors.

EP-A-0546,907A discloses an angular position sensor having a closed, continuous resistive track and a cursor which can move in electrical contact with the track.

DE-A-3634051 discloses a circuit for determining the pick-up position in a resistance teletransmitter.

DE-A-3812760 discloses a potentiometer coupled to a vehicle throttle pedal. The potentiometer generates an output voltage which is supplied to a microprocessor control unit for controlling the position of the throttle valve.

It is an object of this invention to provide a variable resistance sensor substantially alleviating the above problem.

According to the invention there is provided a variable resistance sensor for sensing the position of a movable component, the sensor comprising an electrically resistive track, a first terminal, a second terminal and a third terminal which can move along the electrically resistive track, in electrical contact therewith, as the position of the movable component changes, wherein said third terminal can move between first and second extreme positions on the electrically resistive track and there is a fixed electrical resistance between each said extreme position and a respective one of said first and second terminals, wherein voltage is supplied to the electrically resistive track and processing means are used to monitor respective electrical voltages produced across the first and the third terminals and across the second and the third terminals, characterised in that said processing means is arranged to select as an output one or another of said voltages in dependence on the values of one or both of said voltages.

In a particular embodiment of the invention, the processing means selects one of said voltages if another of said voltages lies outside a predetermined range of voltage and said one voltage lies within that range. Said processing means may generate a warning signal if said another voltage lies outside said predetermined range.

Said fixed electrical resistances may be formed by the electrically resistive track itself. In this case, the first and second terminals may be electrically connected to the electrically resistive track at respective points of connection therealong and said first and second extreme positions are intermediate said points of connection.

The electrically resistive track may be a continuous track, and in a particular embodiment the electrically resistive track is annular.

In a particular application of the invention the variable resistance sensor is used to monitor the position of a vehicle throttle pedal.

Variable resistance sensors according to the invention are now described, by way of example only, with reference to the accompanying drawings, in which:

Figure 1 is a diagrammatic illustration of a variable resistance sensor according to the invention;

Figure 2 shows another variable resistance sensor according to the invention;

Figure 3 shows the equivalent circuit of the variable resistance sensors illustrated in Figures 1 and 2; and

Figure 4 shows output voltages produced by the variable resistance sensors shown in Figures 1 and 2.

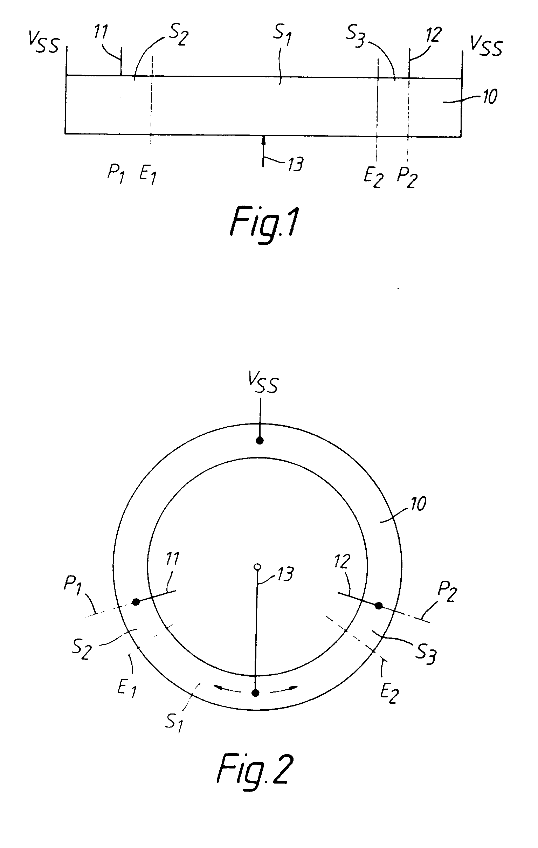

Referring to Figure 1, the variable resistance sensor comprises an electrically conductive track 10 connected at each end to a common voltage source $V_{ss}$.

The sensor has a first terminal 11 and a second terminal 12, each terminal 11,12 being electrically connected to track 10 at a fixed position $P_1, P_2$ along its length.

A third terminal 13 is coupled, in known manner, to a moveable component whose position is to be sensed, and can move along the track 10, in electrical contact therewith, as the position of the moveable component changes.

The third terminal 13 moves between two extreme positions $E_1, E_2$ on the track, intermediate the fixed positions $P_1, P_2$. Accordingly, the section $S_1$ of track 10 along which terminal 13 can move is connected to each terminal 11,12 via a respective section $S_2, S_3$ of track having a fixed electrical resistance $R_2$.

It will be understood that track 10 need not be linear, as shown in Figure 1. Alternatively, track 10 could be a curved track, and Figure 2 of the drawings shows another embodiment of the invention in which the track is continuous. In this embodiment, the track 10 is annular and the third terminal 13 is a rotary terminal which moves on an arc about the centre of the track.

In a particular application of the embodiment shown in Figure 2, the variable resistance sensor is used to sense the position of a vehicle pedal, e.g. a vehicle throttle pedal. In this application, the third terminal 13 is coupled to rotate about the pivot axis of the pedal and the sensor output represents the angular position of the pedal.

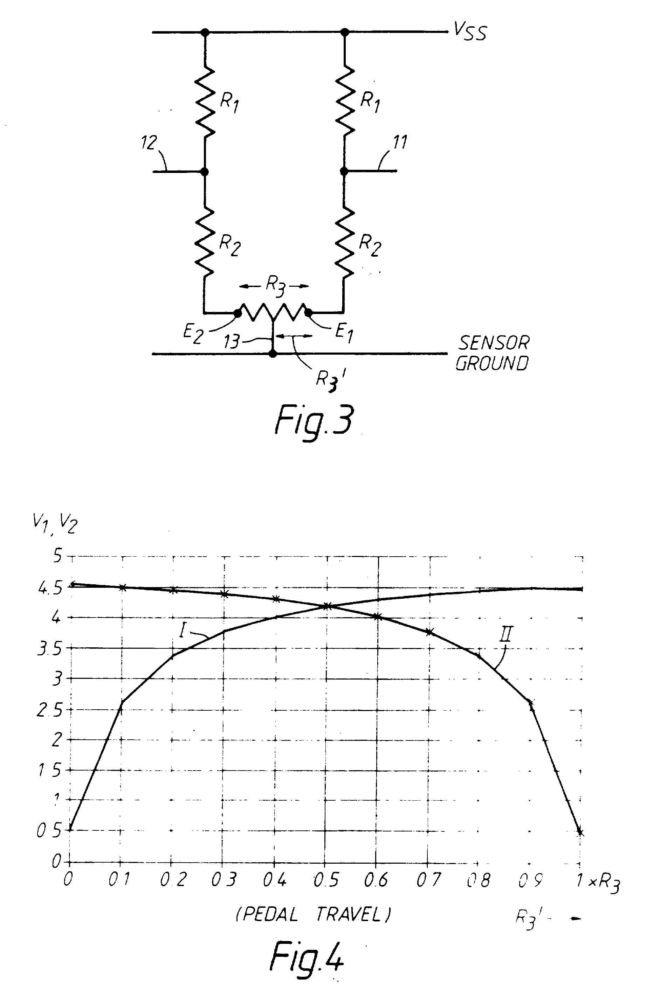

In the illustrated embodiments, the third terminal 13 is connected to ground. As will now be explained with reference to Figure 3, voltages $V_1$, $V_2$ measured across the respective pairs of terminals 11,13 and 12,13 are both representative of the position of the third terminal 13 on the track.

Figure 3 shows an electrical circuit equivalent to the track configurations of Figures 1 and 2. Referring to Figure 3, the section $S_1$ of track over which the third terminal 13 can move has a resistance $R_3$, whereas the section of track between the (moveable) terminal 13 and the (fixed) extreme position $E_1$ has a resistance $R_3'$ which depends linearly on distance, the distance moved by terminal 13. Similarly, the section of track between terminal 12 and the extreme position $E_2$ has a resistance $R_3-R_3'$. There is also a fixed resistance $R_1$ between voltage source $V_{ss}$ and each fixed terminal 11,12.

With this circuit configuration, it can be shown that

$$V_1 = \frac{R_2 + R_3'}{R_1 + R_2 + R_3'} \cdot V_{ss} \rightarrow \qquad (1)$$

and

$$V_2 = \frac{R_2 + R_3 - R_3'}{R_1 + R_2 + R_3 - R_3'} \cdot V_{ss} \rightarrow \qquad (2)$$

Curves I and II in Figure 4 show how the voltages $V_1$, $V_2$ vary as a function of $R_3'$, from the value $R_3'$ = 0 (when terminal 13 at $E_1$) to the value $R_3' = R_3$ (when terminal 13 as at $E_2$).

Accordingly, each curve I, II shows how the respective voltage $V_1$, $V_2$ varies over the range of travel of a moveable member, such as a pedal, which is coupled to the third terminal 13.

As Figure 4 shows, voltage $V_1$ affords greater sensitivity to displacement of terminal 13 when the terminal is closer to $E_1$ than to $E_2$ (i.e. when $R_3'$ is in the range from 0 to 0.5 $R_3$) whereas voltage $V_2$ affords greater sensitivity when terminal 13 is closer to $E_2$ than to $E_1$ (i.e. when $R_3'$ is in the range from 0.5 $R_3$ to $R_3$).

Therefore, by making use of both voltages $V_1$, $V_2$, but over different selected ranges of $R_3'$ a sensor is obtained having a relatively high sensitivity to displacement over substantially the entire range of travel of the moveable member.

In one implementation of this, both voltages $V_1$, $V_2$ are supplied to a microprocessor where their values are compared. If $V_1 \leq V_2$ (i.e. if $R_3'$ is in the range 0 to 0.5 $R_3$), voltage $V_1$ is used as the output voltage, whereas if $V_1 > V_2$ (i.e. if $R_3'$ is in the range 0.5 $R_3$ to $R_3$) voltage $V_2$ is used as the output voltage. Clearly, other criteria for selecting between voltages $V_1$ and $V_2$ could be adopted.

A sensor such as this is particularly beneficial in applications requiring high sensitivity to relatively small displacements of a moveable component, such as a vehicle throttle pedal. Furthermore, although the sensor produces two output voltages, giving improved sensitivity, it has only a single electrically conductive track, thereby reducing the manufacturing complexity and costs associated with known twin track sensors.

It will be apparent from equations (1) and (2) above that, in normal operation, the output voltages $V_1$ and $V_2$ will always have a finite value, regardless of the position of the third terminal 13 along track 10. More specifically, in normal operation, the output voltages $V_1$ and $V_2$ will always be greater than zero and will always be less than $V_{ss}$.

These characteristics of the sensor can be exploited to monitor the validity of the output voltages $V_1$ and $V_2$ that are produced in order to detect for the occurence of a fault condition. To this end, the value of voltages $V_1$ and $V_2$ are monitored continuously in a microprocessor processor to which they are supplied. If the determines that one of the output voltages ($V_1$, say) does not satisfy the aforementioned conditions (i.e. if $V_1 < V_{E1}$ or if $V_1 > V_{E2}$, where $V_{E1}$ is the voltage from sensor output 11 when the pedal is at position $E_1$ and $V_{E2}$ is the voltage from sensor output 12 when the pedal is at position $E_2$) it will trigger a fault condition and switch the output permanently to the other output voltage ($V_2$), provided, of course, that the other output voltage satisfies the required conditions. In this manner the sensor will continue to function even though a fault has occurred in a part of the circuit. The microprocessor may perform more complex validity tests upon the voltages $V_1$, $V_2$. For example, such tests might involve detecting for a predetermined relationship between the voltages.

As already explained, a variable resistance sensor as described can be used to sense the position of a vehicle throttle pedal and, in this application, the output voltages produced would typically be supplied to the vehicle's digital control unit (DCU) for processing and monitoring.

## Claims

1. A variable resistance sensor for sensing the position of a movable component, the sensor comprising an electrically resistive track (10), a first terminal (11), a second terminal (12) and a third terminal (13) which can move along the electrically resistive track (10), in electrical contact therewith, as the position of the movable component changes, wherein said third terminal (13) can move between first and second extreme positions ($E_1$,$E_2$) on the electrically resistive track (10) and there is a fixed electrical resistance ($R_2$) between each said extreme position ($E_1$,$E_2$) and a respective one of said first and second terminals (11,12), wherein voltage ($v_{ss}$) is supplied to the electrically resistive track (10) and processing means are used to monitor respective electrical voltages ($V_1$,$V_2$) produced across the first and the third terminals (11,13) and across the second and the third terminals (12,13), characterised in that said processing means is arranged to select as an output one or another of said voltages ($V_1$,$V_2$) in dependence on the values of one or both of said voltages ($V_1$,$V_2$).

2. A variable resistance sensor as claimed in claim 1, wherein said processing means selects one of said voltages ($V_1$ or $V_2$) if it is less than or equal to another said voltage ($V_2$ or $V_1$).

3. A variable resistance sensor as claimed in claim 1, wherein said processing means selects one of said voltages ($V_1$ or $V_2$) if another of said voltages ($V_2$ or $V_1$) lies outside a predetermined range of voltage and said one voltage ($V_1$ or $V_2$) lies within that range.

4. A variable resistance sensor as claimed in claim 3, wherein said processing means generates a warning signal if said another voltage ($V_2$ or $V_1$) lies outside said predetermined range.

5. A variable resistance sensor as claimed in any one of claims 1 to 4, wherein said fixed electrical resistances ($R_2$) are formed by the electrically resistive track (10).

6. A variable resistance sensor as claimed in claim 5, wherein the first and second terminals (11,12) are electrically connected to the electrically resistive track (10) at respective points of connection ($P_1$,$P_2$) therealong and said first and second extreme positions ($E_1$,$E_2$) are intermediate said points of connection ($P_1$,$P_2$).

7. A variable resistance sensor as claimed in any one of claims 1 to 6, wherein the electrically resistive track (10) is a continuous track.

8. A variable resistance sensor as claimed in claim 7, wherein the electrically resistive track (10) is annular.

9. A variable resistance sensor as claimed in any one of claims 1 to 8 for monitoring the position of a vehicle throttle pedal.

**Patentansprüche**

1. Sensor mit variablem Widerstand zum Erfassen der Position eines bewegbaren Bauteils, wobei der Sensor eine elektrisch widerstandsmäßige Spur (10), einen ersten Anschluß (11), einen zweiten Anschluß (12) und einen dritten Anschluß (13), der sich entlang der elektrisch widerstandsmäßigen Spur (10), in elektrischem Kontakt damit, bewegen kann, wenn sich die Position des bewegbaren Bauteils ändert, aufweist, wobei sich der dritte Anschluß (13) zwischen einer ersten und einer zweiten Extremposition ($E_1$, $E_2$) auf der elektrisch widerstandsmäßigen Spur (10) bewegen kann und wobei dort ein festgelegter, elektrischer Widerstand ($R_2$) zwischen jeder von der Extremposition ($E_1$, $E_2$) und einem jeweiligen einen des ersten und des zweiten Anschlusses (11, 12) vorhanden ist, wobei eine Spannung ($V_{ss}$) zu der elektrisch widerstandsmäßigen Spur (10) zugeführt wird und Verarbeitungseinrichtungen verwendet werden, um jeweilige elektrische Spannungen ($V_1$, $V_2$) zu überwachen, die über den ersten und den dritten Anschluß (11,13) und über den zweiten und den dritten Anschluß (12, 13) produziert sind, dadurch gekennzeichnet, daß die Verarbeitungseinrichtung so angeordnet ist, um als einen Ausgang eine oder eine andere der Spannungen ($V_1$, $V_2$) in Abhängigkeit von den Werten von einer oder beiden der Spannungen ($V_1$, $V_2$) auszuwählen.

2. Sensor mit variablem Widerstand nach Anspruch 1, wobei die Verarbeitungseinrichtung eine der Spannungen ($V_1$ oder $V_2$) auswählt, falls sie geringer oder gleich zu einer anderen der Spannung($V_2$ oder $V_1$) ist.

3. Sensor mit variablem Widerstand nach Anspruch 1, wobei die Verarbeitungseinrichtung eine der Spannungen ($V_1$ oder $V_2$) auswählt, wenn eine andere der Spannungen ($V_2$ oder $V_1$) außerhalb eines vorbestimmten Spannungsbereichs liegt und die eine Spannung ($V_1$ oder $V_2$) innerhalb dieses Bereichs liegt.

4. Sensor mit variablem Widerstand nach Anspruch 3, wobei die Verarbeitungseinrichtung ein Warnsignal erzeugt, wenn die andere Spannung ($V_2$ oder $V_1$) außerhalb des vorbestimmten Bereichs liegt.

5. Sensor mit variablem Widerstand nach einem der Ansprüche 1 bis 4, wobei die festgelegten, elektrischen Widerstände ($R_2$) durch die elektrisch widerstandsmäßige Spur (10) gebildet sind.

6. Sensor mit variablem Widerstand nach Anspruch 5, wobei der erste und der zweite Anschluß (11,12) elektrisch mit der elektrisch widerstandsmäßigen Spur (10) an jeweiligen Verbindungspunkten ($P_1$, $P_2$) dort entlang verbunden sind und die erste und die zweite Extremposition ($E_1$, $E_2$) zwischen diesen Verbindungspunkten ($P_1$ $P_2$) liegen.

7. Sensor mit variablem Widerstand nach einem der Ansprüche 1 bis 6, wobei die elektrisch widerstandsmäßige Spur (10) eine kontinuierliche Spur ist.

8. Sensor mit variablem Widerstand nach Anspruch 7, wobei die elektrisch widerstandsmäßige Spur (10) ringförmig ist.

9. Sensor mit variablem Widerstand nach einem der Ansprüche 1 bis 8 zum Überwachen der Position eines Fahrzeug-Gaspedals.

**Revendications**

1. Capteur à résistance variable destiné à détecter la position d'un composant mobile, le capteur comprenant une piste résistive électriquement (10), une première borne (11), une seconde borne (12) et une troisième borne (13) qui peut se déplacer le long d'une piste résistive électriquement (10), en contact électrique avec celle-ci, lorsque la position du composant mobile varie, dans lequel ladite troisième borne (13) peut se déplacer entre les première et seconde positions extrêmes ($E_1$, $E_2$) sur la piste résistive électriquement (10) et il existe une résistance électrique fixe ($R_2$) entre chacune desdites positions extrêmes ($E_1$, $E_2$) et une borne respective desdites première et seconde bornes (11, 12), dans lequel une tension ($V_{ss}$) est appliquée à la piste résistive électriquement (10) et un moyen de traitement est utilisé afin de contrôler les tensions électriques respectives ($V_1$, $V_2$) produites entre les première et troisième bornes (11, 13) et entre les seconde et troisième bornes (12, 13), caractérisé en ce que ledit moyen de traitement est configuré de façon à sélectionner en tant que signal de sortie l'une ou l'autre desdites tensions de sortie ($V_1$, $V_2$) en fonction des valeurs de l'une ou des deux dites tensions ($V_1$, $V_2$).

2. Capteur à résistance variable selon la revendication 1, dans lequel ledit moyen de traitement sélectionne l'une desdites tensions ($V_1$ ou $V_2$) si elle est inférieure ou égale à une autre dite tension ($V_2$ ou $V_1$).

3. Capteur à résistance variable selon la revendication 1, dans lequel ledit moyen de traitement sélectionne une desdites tensions ($V_1$ ou $V_2$) si une autre desdites tensions ($V_2$ ou $V_1$) se situe en dehors d'une plage prédéterminée de tension et si ladite une tension ($V_1$ ou $V_2$) se situe à l'intérieur de cette plage.

4. Capteur à résistance variable selon la revendication 3, dans lequel ledit moyen de traitement génère un signal d'avertissement si ladite une autre tension ($V_2$ ou $V_1$) se situe en dehors de ladite plage prédéterminée.

5. Capteur à résistance variable selon l'une quelconque des revendications 1 à 4, dans lequel lesdites résistances électriques fixes ($R_2$) sont formées par la piste résistive électriquement (10).

6. Capteur à résistance variable selon la revendication 5, dans lequel les première et seconde bornes (11, 12) sont reliées électriquement à la piste résistive électriquement (10) au niveau des points de connexion respectifs ($P_1$, $P_2$) le long de celle-ci et lesdites première et seconde positions extrêmes ($E_1$, $E_2$) sont lesdits points de connexion intermédiaires ($P_1$, $P_2$).

7. Capteur à résistance variable selon l'une quelconque des revendications 1 à 6, dans lequel la piste résistive électriquement (10) est une piste continue.

8. Capteur à résistance variable selon la revendication 7, dans lequel la piste résistive électriquement (10) est annulaire.

9. Capteur à résistance variable selon l'une quelconque des revendications 1 à 8 destiné à contrôler la position d'une pédale d'accélérateur de véhicule.

Fig.1

Fig.2

Fig.3

$V_1, V_2$

(PEDAL TRAVEL)

$R_3{'}$ –

Fig.4